(19) Europäisches Patentamt
European Patent Office
Office européen des brevets

(11) **EP 2 929 293 B1**

(12) **EUROPÄISCHE PATENTSCHRIFT**

(45) Veröffentlichungstag und Bekanntmachung des Hinweises auf die Patenterteilung:
**08.08.2018   Patentblatt 2018/32**

(21) Anmeldenummer: **13802329.6**

(22) Anmeldetag: **04.12.2013**

(51) Int Cl.:
**G01C 19/5726** *(2012.01)*

(86) Internationale Anmeldenummer:
**PCT/EP2013/075498**

(87) Internationale Veröffentlichungsnummer:
**WO 2014/086836 (12.06.2014 Gazette 2014/24)**

(54) **ANTRIEBS- UND KOMPENSATIONSSCHALTUNG FÜR KAPAZITIVE MEMS-STRUKTUREN**

DRIVE AND COMPENSATION CIRCUIT FOR CAPACITIVE MEMS STRUCTURES

CIRCUIT D'ATTAQUE ET DE COMPENSATION POUR DES STRUCTURES MEMS CAPACITIVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2012   DE 102012222225**

(43) Veröffentlichungstag der Anmeldung:
**14.10.2015   Patentblatt 2015/42**

(73) Patentinhaber: **Albert-Ludwigs-Universität Freiburg**
**79085 Freiburg (DE)**

(72) Erfinder:
• **ROMBACH, Stefan**
**79291 Merdingen (DE)**
• **MARX, Maximilian**
**79108 Freiburg (DE)**
• **MANOLI, Yiannos**
**79104 Freiburg (DE)**

(74) Vertreter: **Grünecker Patent- und Rechtsanwälte PartG mbB**
**Leopoldstraße 4**
**80802 München (DE)**

(56) Entgegenhaltungen:
**US-A1- 2009 309 613**

**Beschreibung**

Die vorliegende Erfindung bezieht sich auf eine Schaltung zum Ansteuern einer kapazitiven MEMS-Struktur mit mindestens einem zu einer Schwingbewegung anregbaren Schwingerelement und einer elektrostatischen Anregungseinheit, die mindestens einen ersten und einen zweiten Eingangsanschluss besitzt. Weiterhin bezieht sich die vorliegende Erfindung auf einen Coriolis-Drehratensensor mit einem primären elektrostatisch anregbaren Schwingerelement und einem sekundären elektrostatisch anregbaren Schwingerelement, wobei der Coriolis-Drehratensensor zum Ansteuern des primären und/oder zum Rückstellen des sekundären Schwingerelements eine Schaltung nach einem der vorhergehenden Ansprüche aufweist. Die Erfindung bezieht sich schließlich auf ein zugehöriges Verfahren zum Ansteuern einer kapazitiven MEMS-Struktur.

Kapazitive Strukturen werden in MEM-Systemen (Micro electromechanical systems) genutzt, um mittels elektrostatischer Kraft Mikrospiegel, mikrostrukturierte Schalter und Sensoren anzutreiben.

Ein typisches Beispiel für einen Sensor, der kapazitive Strukturen sowohl zur Kompensation von Kräften als auch zur Aktuierung nutzt, ist der Drehratensensor. Drehratensensoren werden in Fahrerassistenzsystemen, Fahrsicherheitssystemen wie einem elektronischen Stabilitätsprogramm, Navigationssystemen und zunehmend auch in mobilen Geräten wie Mobiltelefonen, Tablet-Computern und Spielekonsolen verwendet. Dabei detektieren diese Sensoren Drehraten um eine definierte Achse basierend auf dem Coriolis-Effekt.

Ein solcher Drehratensensor umfasst beispielsweise zwei Massen, eine primäre sowie eine sekundäre. Um eine Drehrate mit Hilfe des Coriolis-Effekts detektieren zu können, muss die gesamte Masse in Bewegung versetzt werden. Die primäre Masse, in der die sekundäre Masse aufgehängt ist, wird durch elektrostatische Aktuierung mit konstanter Frequenz in eine konstante Schwingung versetzt. Durch eine Rotation des Sensors um seine sensitive Achse wird die sekundäre Masse orthogonal zur primären Achse gemäß der nachfolgenden Gleichung (1) ausgelenkt.

$$\vec{F}_c = -2 \cdot m \cdot \vec{\Omega} \times \vec{v}_p \tag{1}$$

Dabei bedeutet $F_c$ die Coriolis-Kraft, $m$ die Masse, $\Omega$ die Drehrate und $v_p$ die Geschwindigkeit der primären Masse.

Die sekundäre Masse ist dabei mechanisch so aufgehängt, dass sie nur orthogonal zur primären Oszillation auslenken kann. Um eine hohe Linearität, große Bandbreiten und verringerte Empfindlichkeit gegenüber Prozessschwankungen zu erreichen, werden diese Sensoren rückgekoppelt betrieben.

Dabei wird gemäß der nachfolgenden Gleichung (2) durch das Aufbringen einer rückstellenden kapazitiven Kraft $F_{es}$ auf die sekundäre Masse die wirkende Coriolis-Kraft $F_c$ kompensiert.

Das Aufbringen dieses Kompensationssignals, das der Eingangsgröße entgegenwirkt, wird Kraftrückkopplung genannt.

$$\vec{F}_C = \vec{F}_{es} \tag{2}$$

Somit bleibt die sekundäre Masse in der Ruheposition und die generierte kapazitive Kraft $F_{es}$ ist ein direktes Maß für die auf das System einwirkende Drehrate. Um ausreichend hohe Kräfte zur Aktuierung der primären und sekundären Masse zu generieren, ist es notwendig, elektrische Spannungen zu verwenden, die um ein Vielfaches höher sind als typische Versorgungsspannungen integrierter Schaltungen. Des Weiteren werden diese hohen Spannungen genutzt, um die Federkonstante und somit die Resonanzfrequenz der sekundären Masse nachstellen zu können.

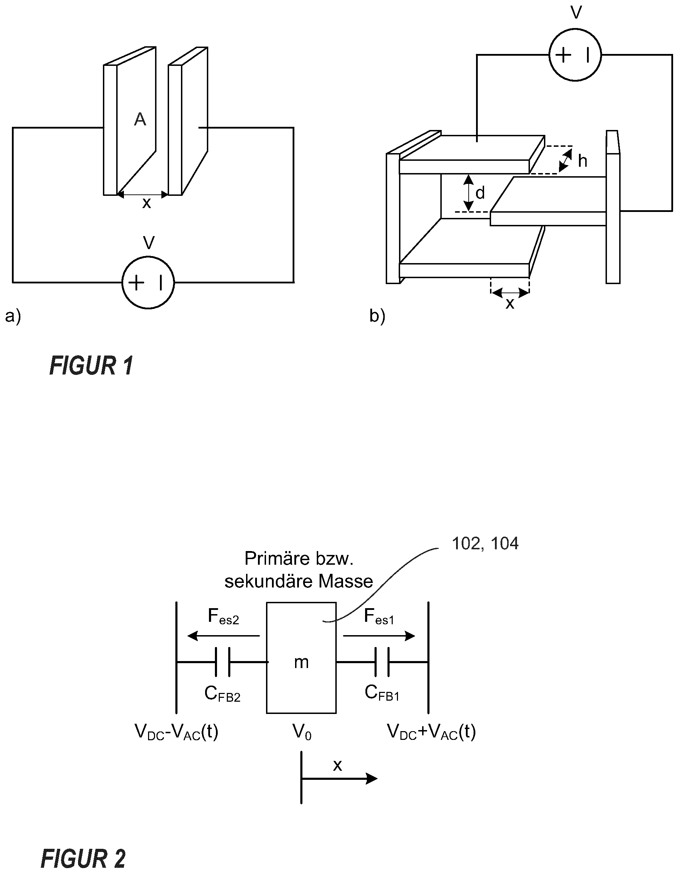

Zwischen zwei oder mehreren elektrisch entgegengesetzt aufgeladene Elektroden (Kapazität) wirkt eine elektrostatische attraktive Kraft. Diese Kraft lässt sich quantitativ über die Änderung der in der Kapazität gespeicherten Energie $E$ mit dem Abstand zwischen den Elektroden $x$ bestimmen. Im Fall von parallelen Elektroden, wie sie auf der sekundären Seite von Drehratensensoren zum Einsatz kommen, berechnet sich die Kraft $F_{es,p}$ nach Gleichung (3). Hierbei ist $\varepsilon_r$ die relative Permittivität, $\varepsilon_0$ die Dielektrizitätskonstante, und V die Spannung zwischen den Elektroden. A bedeutet die Elektrodenfläche (siehe Figur 1a).

Für die primäre Seite werden in Drehratensensoren typischerweise Kammaktoren genutzt, in deren Fall sich die Kraft $F_{es,k}$ nach Gleichung (4) berechnet. In Gleichung (4) bedeutet $N$ die Anzahl der Kämme, d der konstante Abstand zwischen den Elektroden und $h$ die horizontale Ausdehnung der Elektroden. Beide Elektrodenkonfigurationen sind in Figur 1 dargestellt.

$$\vec{F}_{es,p} = \frac{dE}{dx} = -\frac{1}{2}\frac{\varepsilon_0 \varepsilon_r A}{x^2}V^2 \qquad (3)$$

$$\vec{F}_{es,k} = \frac{dE}{dx} = -N\frac{\varepsilon_0 \varepsilon_r h}{d}V^2 \qquad (4)$$

Die durch parallele Elektroden generierte Kraft $F_{es,p}$ ist im Gegensatz zu Kraft $F_{es,k}$ auf Kammaktoren vom Abstand x abhängig. Da im Fall der sekundären Seite die Bewegung der Masse aber kompensiert wird, kann diese Abhängigkeit vernachlässigt werden. In beiden Fällen (Figur 1 a und b) hängt die Kraft quadratisch von der Spannung ab.

Da elektrostatische Kräfte stets anziehend wirken, wird im Falle von Drehratensensoren die primäre Masse differentiell angetrieben und die Bewegung der sekundären Masse ebenfalls differentiell kompensiert. Wie in Figur 2 dargestellt, wird dafür die Masse und somit auch die Gegenelektroden der Kapazitäten $C_{FB1,2}$ auf ein festes Potential $V_0$ gelegt. An die zweite Elektrode der Kapazitäten $C_{FB1,2}$ wird eine Spannung mit festem Gleichspannungsanteil $V_{DC}$ und variablen Spannungsanteil $V_{AC}(t)$ gegeben. Hierbei ist die Spannung $V_{AC}(t)$ im Allgemeinen eine Rechteckspannung mit einer um 180 Grad zwischen $C_{FB1}$ und $C_{FB2}$ verschobenen Phase.

Dadurch ergibt sich gemäß der nachfolgenden Gleichung (5) die gesamte auf die Masse wirkende Kraft $F_{es,tot}$, die linear von den Spannungen $V_{DC}$ und $V_{AC}(t)$ abhängt.

$$\vec{F}_{es,tot} = F_{es1} - F_{es2} = -2\frac{C_{FB1,2}}{x}V_{AC}(t)(V_{DC} - V_0) \qquad (5)$$

Die erforderliche elektrostatische Kraft kann zum einen mittels eines Hochspannungsgenerators und Hochspannungsverstärkern erzeugt werden.

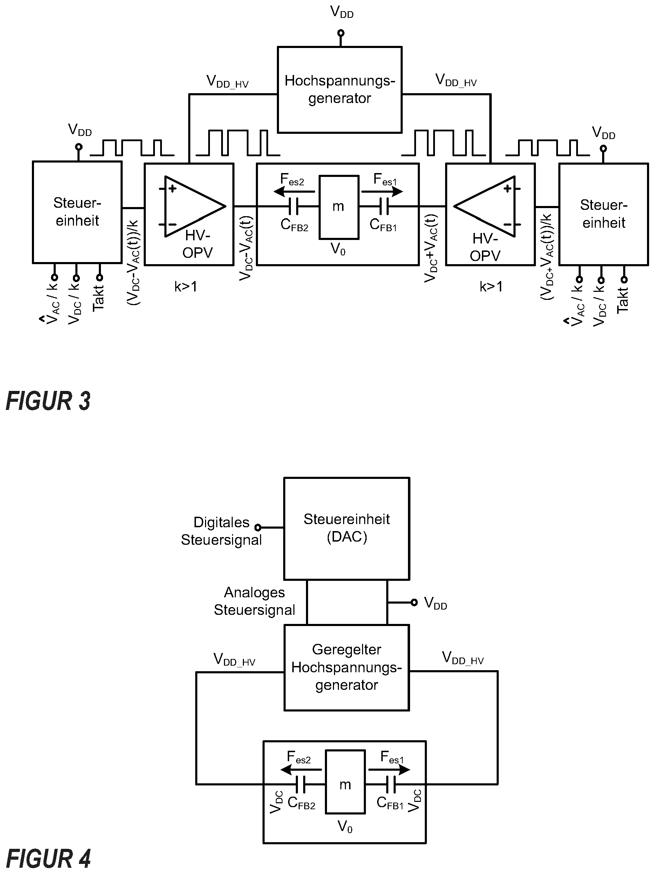

Die zur Generierung elektrostatischer kapazitiver Kräfte nach Gleichung (5) notwendigen Spannungen $V_{DC}$ und $V_{AC}(t)$ werden, wie in Figur 3 dargestellt, gewöhnlich mittels Operationsverstärkern an die kapazitiven Strukturen des Sensors angelegt. Eine solche Schaltungsanordnung ist beispielsweise in dem Artikel Lasse Aaltonen, Mikko Saukoski, Kari Halonen: "On-chip Digitally Tunable High Voltage Generator for Electrostatic Control of Micromechanical Devices", IEEE 2006 Custom Intergrated CircuitsConference (CICC), S. 583-586, näher beschrieben und auch Gegenstand der WO 2007/012518 A1.

Die maximale Ausgangsspannung der Operationsverstärker wird durch ihre Versorgungsspannung begrenzt. Um ausreichend hohe Kräfte erzeugen zu können, ist es daher im Allgemeinen notwendig, Hochspannungsoperationsverstärker (HV-OPV) zu nutzen, die mit Spannungen oberhalb der Chipversorgungsspannung $V_{DD}$ arbeiten. Deswegen erzeugt ein Hochspannungsgenerator aus der Spannung $V_{DD}$ eine deutlich höhere Spannung $V_{DD\_HV}$ und stellt diese den HV-OPV als Versorgungsspannung zur Verfügung. Der Hochspannungsgenerator muss hierbei sowohl den statischen Strom zum Betrieb der HV-OPV bereitstellen, als auch den dynamischen Strom zum Aufladen bzw. Entladen der Kapazitäten $C_{FB1}$ und $C_{FB2}$ während der Umschaltvorgänge der Spannung $V_{AC}(t)$. Die mit Niederspannung versorgten Steuereinheiten stellen das von den HV-OPV mit einem Faktor $k$ zu verstärkende Signal anhand eines Takts, der gewünschten Amplitude $\hat{V}_{AC}/k$, und der DC Spannung $V_{DC}/k$ bereit. Durch den Betrieb der HV-OPV in Rückkopplung können die Spannung $V_{DC}$ und $V_{AC}(t)$ genau eingestellt werden.

Weiterhin kann die elektrostatische Kraft auch mittels eines Hochspannungsgenerators in direkter Verbindung mit kapazitiven Strukturen zur Aktuierung erzeugt werden, wie dies beispielsweise aus der WO 2012/130541 A1 bekannt ist.

Diese bekannte Lösung zur Generierung definierter Hochspannungen an kapazitiven Strukturen ist in Figur 4 dargestellt. Hierbei wird auf den Einsatz von HV-OPV verzichtet und stattdessen die geregelte Ausgangsspannung des Hochspannungsgenerators $V_{DD\_HV}$ direkt an die Kapazitäten $C_{FB1}$ und $C_{FB2}$ angelegt. Der Hochspannungsgenerator wird über ein analoges Steuersignal aus einer Steuereinheit (z.B. Digital zu Analog Converter) nachgeregelt. Trotz dieser Möglichkeit zum Nachregeln handelt es sich in diesem Fall bei der Hochspannung $V_{DD\_HV}$ im eingeschwungenen Zustand um eine statische Spannung $V_{DC}$. Dies ist in der Anwendung, die für die WO 2012/130541 A1 beschrieben ist, sinnvoll, da z. B. zur Quadratur-Kompensation von Drehratensensoren keine variierenden Spannungen $V_{AC}(t)$ benötigt werden.

Die bekannten Lösungen haben jedoch gravierende Nachteile. Diese liegen im Fall der Schaltung gemäß Figur 3 zum einen im enormen Leistungsbedarf der HV-OPV und zum anderen in den hohen Anforderungen und dem Leistungsbedarf des Hochspannungsgenerators. Die Erzeugung der Spannung $V_{DD\_HV}$ durch den Hochspannungsgenera-

EP 2 929 293 B1

tors ist stets verlustbehaftet. Zudem muss diese Spannung aufgrund der HV-OPV-Architektur meist oberhalb der maximal nutzbaren Ausgangsspannung der Verstärker liegen. Des Weiteren erschweren die hohen dynamischen Ströme beim Umschalten der Spannung $V_{AC}(t)$ an den Kapazitäten die konstante Regelung der Hochspannung $V_{DD\_HV}$.

Der Ruhestrom der HV-OPV ist im Fall der häufig verwendeten Klasse-A-Verstärker von der Flankensteilheit und den zu treibenden Kapazitäten $C_{FB1,2}$ abhängig. Da für Drehratensensoren eine hohe Flankensteilheit benötigt wird und parallel zu den Kapazitäten $C_{FB1,2}$ gewöhnlich noch große parasitäre Kapazitäten liegen, ist der Ruhestrom im beschriebenen System beträchtlich. Der Leistungsbedarf der HV-OPV steigt im Übrigen linear mit der Versorgungsspannung $V_{DD\_HV}$, somit trägt die Schaltung zur Kraftgenerierung einen erheblichen Anteil zum Gesamtleistungsverbrauch des Sensorauslesesystems bei.

Im Fall der Schaltung gemäß Figur 4 ist ein großer Nachteil, dass lediglich statische Spannungen $V_{DC}$ generiert werden können. Für den Antrieb der primären Masse und die Kompensation der Bewegung der sekundären Masse sind zeitlich variierenden Spannung $V_{AC}(t)$ allerdings unabdingbar. Um mit der Konfiguration aus Figur 4 trotzdem ein solches Signal $V_{AC}(t)$ in den Hochspannungsbereich zu überführen, müsste das digitale Steuersignal zeitlich variiert werden und der Hochspannungsgenerator müsste die Spannung $V_{DD\_HV}$ schnell genug nachführen können. Hieraus ergeben sich hohe Anforderungen an die Dynamik des Hochspannungsgenerators und somit ein erhöhter Leistungsverbrauch. Zudem ist es bei einer Vielzahl von Hochspannungsgeneratoren nur möglich, die Spannung aktiv zu erhöhen. Die Verringerung der Spannung geschieht hingegen meist passiv über den Laststrom der Anwendung. Dieser Umstand erhöht die Komplexität der Schaltung zur Hochspannungsgenerierung weiter.

Des Weiteren handelt es sich bei den eingesetzten Hochspannungsgeneratoren üblicherweise um Schaltnetzteile, deren Ausgangsspannung stets mit einer Welligkeit in Abhängigkeit der Schaltfrequenz überlagert ist. Für hochauflösende Drehratensensoren muss diese Welligkeit sehr gering gehalten werden, um keine zusätzlichen Störsignale in das System einzukoppeln. Dies ist bei direkter Verbindung von Hochspannungsgenerator und Sensor im Allgemeinen nur durch den Einsatz sehr hoher Schaltfrequenzen möglich. Hierdurch erhöht sich der Leistungsbedarf eines solchen Systems weiter.

Die US 2009/0309613 A1 offenbart einen kapazitiven MEMS-Beschleunigungssensor mit einem beweglichen Balken, einem Differentialkondensator mit einer beweglichen Elektrode, die sich in Antwort auf die Auslenkung des beweglichen Balkens bewegt und zwischen zwei stationären Elektroden angeordnet ist, sowie einer Spannungsschaltung, die eine erste Spannung an die erste stationäre Elektrode und eine zweite Spannung an die zweite stationäre Elektrode sowie eine dritte Spannung an die bewegliche Elektrode anlegt.

Der Beschleunigungssensor hat außerdem eine Überwachungseinrichtung um die Auslenkung des beweglichen Balkens zu detektieren. Weiterhin wird der Abstand zwischen der beweglichen Elektrode und mindestens einer der stationären Elektroden überwacht. Schließlich hat der Beschleunigungssensor eine Spannungsverringerungsschaltung, die mit der Überwachungseinrichtung, der beweglichen Elektrode und den stationären Elektroden verbunden ist. Die Spannungsverringerungsschaltung verringert den Unterschied zwischen der dritten Spannung und den Spannungen an den stationären Elektroden, wenn die Überwachungseinrichtung detektiert, dass die Auslenkung des beweglichen Balkens größer oder gleich einem Schwellenwert ist.

Die Aufgabe, die der vorliegenden Erfindung zugrunde liegt, besteht daher darin, eine Schaltungsanordnung für eine zuverlässige Detektion des Drehratensignals und den dafür notwendige konstante Antrieb des Drehratensensors anzugeben. Die Detektion des Drehratensignals und der Antrieb der Masse soll dabei bei minimalem Energieverbrauch ermöglicht werden.

Diese Aufgabe wird durch den Gegenstand der unabhängigen Patentansprüche gelöst. Vorteilhafte Weiterbildungen der vorliegenden Erfindung sind Gegenstand der abhängigen Patentansprüche.

Dabei basiert die vorliegende Erfindung auf der Idee, zum Erzeugen der elektrostatischen Kräfte an einem Differentialkondensator die erforderliche hohe Gleichspannung und den für die Regelung erforderlichen Wechselanteil mittels voneinander getrennter Komponenten bereitzustellen, so dass der Hochspannungsgenerator unter Idealbedingungen die Kapazitäten des Differentialkondensators und der Pumpkondensatoren nur während des Anlaufens auf ein definiertes Potential aufladen muss und im Dauerbetrieb nicht mehr belastet wird. Insbesondere wird der dynamische Strom zum Aufladen bzw. Entladen der Kapazitäten des Differentialkondensators während der Umschaltvorgänge der Oszillation im Dauerbetrieb nicht von dem Hochspannungsgenerator geliefert. Unter Realbedingungen treten selbstverständlich parasitäre Effekte und Verluste auf.

Gemäß der vorliegenden Erfindung wird eine Schaltung zum Ansteuern einer kapazitiven MEMS-Struktur (Micro electro mechanical system-Struktur, im deutschsprachigen Raum auch oft MST-Struktur, Mikrosystemtechnik-Struktur, genannt) mit mindestens einem zu einer Schwingbewegung anregbaren Schwingerelement und einer elektrostatischen Anregungseinheit, die mindestens einen ersten und einen zweiten Eingangsanschluss besitzt, angegeben. Die Schaltung weist einen Hochspannungsgenerator zum Erzeugen einer Hochspannung aus einer Versorgungsspannung, wobei der Hochspannungsgenerator mit den beiden Eingangsanschlüssen verbindbar ist, und mindestens einen ersten und einen zweiten Pumpkondensator zum Aufladen der elektrostatischen Anregungseinheit, wobei ein erster Anschluss des ersten Pumpkondensators mit dem Hochspannungsgenerator verbunden ist und mit dem ersten Eingangsanschluss verbindbar ist, und ein erster Anschluss des zweiten Pumpkondensators mit dem Hochspannungsgenerator verbunden ist und mit dem zweiten Eingangsanschluss verbindbar ist, auf.

Eine Steuereinheit ist zum Aufprägen eines Wechselsignals mit zweiten Anschlüssen eines jeden Pumpkondensators verbunden, und es ist mindestens einen Niederspannungsoperationsverstärker vorgesehen, der zum Erzeugen eines Korrekturanteils, der dem Wechselsignal überlagert wird, mit der Steuereinheit verbunden ist. Der Korrekturanteil wird in Abhängigkeit von beispielsweise einer aktuellen Position des Schwingerelements oder von einer anderen geeigneten Stellgröße erzeugt. Durch diesen Korrekturanteil wird die Spannung an dem zweiten Anschluss der Pumpkondensatoren beispielsweise durch einen zusätzlichen Gleichanteil oder auch in ihrem Verhältnis zwischen Ein- und Ausschaltdauer entsprechend einer Pulscodemodulation verändert.

Das Wechselsignal umfasst sinusförmige Komponenten und hat insbesondere einen rechteckförmigen zeitlichen Verlauf, kann aber auch jeden anderen geeigneten Verlauf aufweisen.

Gemäß einer vorteilhaften Weiterbildung der vorliegenden Erfindung ist zwischen jedem Pumpkondensator und dem Hochspannungsgenerator jeweils eine Sperrdiode so angeordnet, dass ihre Anode mit dem Hochspannungsgenerator verbunden ist und ihre Kathode mit den ersten und zweiten Eingangsanschlüssen verbindbar ist. Diese Sperrdioden bilden außerdem mit den Pumpkondensatoren jeweils einen Tiefpassfilter, so dass die Anforderung an die Welligkeit der Ausgangsspannung und somit auch an die Taktfrequenz des Hochspannungsgenerators reduziert und der Leistungsverbrauch weiter gesenkt werden kann. Es können aber auch entsprechend verschaltete Transistoren verwendet werden.

Um eine besonders genaue Regelung bei Verwendung der erfindungsgemäßen Schaltung in einer Konfiguration mit geschlossener Regelschleife zu ermöglichen, weist die Steuereinheit einen Eingang für einen extern oder intern zugeführten Takt auf.

Wenn die Kapazität der Pumpkondensatoren so gewählt wird, dass sie wesentlich größer ist als die Kapazität der elektrostatischen Anregungseinheit, hängt die gesamte elektrostatische Kraft wie in Gleichung (5) angegeben von der Hochspannung und dem Wechselsignal ab.

Die vorliegende Erfindung kann in besonders vorteilhafter Weise für einen Coriolis-Drehratensensor mit einem primären elektrostatisch anregbaren Schwingerelement und einem sekundären elektrostatisch anregbaren Schwingerelement eingesetzt werden. Dabei kann der Coriolis-Drehratensensor zum Ansteuern des primären und/oder zum Rückstellen des sekundären Schwingerelements eine derartige erfindungsgemäße Schaltung aufweisen.

Eine Regelschleife zum Ansteuern des primären elektrostatisch anregbaren Schwingerelements umfasst beispielsweise eine phasenverriegelte Regelschleife (phase locked loop, PLL), wie dies in dem Artikel Northemann, T. et al.: "Drive and Sense Interface for Gyroscopes based on Bandpass Sigma-Delta Modulators", Proceedings of 2010 IEEE International Symposium on Circuits and Systems (ISCAS), May 30 2010 - June 2 2010, 3264-3267, insbesondere mit Bezug auf die dortige Fig. 1 erläutert ist. Entsprechend kann außerdem auch (oder alternativ) die Regelschleife zum Rückstellen des sekundären elektrostatisch anregbaren Schwingerelements eine Schaltung gemäß der vorliegenden Erfindung aufweisen und weiterhin einen Bandpassfilter (oder einen Tiefpassfilter) und einen Lead-Kompensator umfassen. Der Lead-Kompensator kann aber auch Teil des Filters sein.

Der erfindungsgemäße Coriolis-Drehratensensor lässt sich besonders platzsparend, störsicher und effizient als integriertes Mikrosystem herstellen, wobei die Schwingerelemente als mikromechanisch hergestellte Komponenten integriert mit zumindest einem Teil der Schaltungselemente zum Ansteuern und Auswerten hergestellt sind.

Die vorliegende Erfindung betrifft außerdem ein Verfahren zum Ansteuern einer kapazitiven MEMS-Struktur mit mindestens einem zu einer Schwingbewegung anregbaren Schwingerelement und einer elektrostatischen Anregungseinheit, die beispielsweise mindestens eine erste und eine zweite gekoppelte Kapazität umfasst, wobei das Verfahren die folgenden Schritte aufweist:

Aufladen jeweils einer positiven Elektrode eines ersten und eines zweiten Pumpkondensators und einer positiven Elektrode der elektrostatischen Anregungseinheit, z. B. der beiden gekoppelten Kapazitäten, mittels eines Hochspannungsgenerators;

Anlegen einer ersten Wechselspannung an die negative Elektrode des ersten Pumpkondensators und Anlegen einer zu der ersten Wechselspannung inversen zweiten Wechselspannung an die negative Elektrode des zweiten Pumpkondensators;

Überlagern der ersten und zweiten Wechselspannung mit einer Ausgleichsspannung, die von einem Istwert der tatsächlichen Position des Schwingerelements oder einer anderen Stellgröße abhängt.

Die beiden gekoppelten Kapazitäten können insbesondere differentiell gekoppelt sein.

In vorteilhafter Weise wird die Ausgleichsspannung von einem Niederspannungsoperationsverstärker bereitgestellt. Im eingeschwungenen Betriebszustand erfolgt ein Ladungsaustausch zwischen dem ersten Pumpkondensator und der ersten differentiell gekoppelten Kapazität sowie zwischen dem zweiten Pumpkondensator und der zweiten differentiell gekoppelten Kapazität über die Steuerung einer Steuereinheit.

Für die Erzeugung eines Istwertsignals für den Istwert der tatsächlichen Position des Schwingerelements können separate Messelektroden verwendet werden, wodurch die Genauigkeit der Messung erhöht werden kann.

Anhand der in den beiliegenden Zeichnungen dargestellten vorteilhaften Ausgestaltungen wird die vorliegende Erfindung im Folgenden näher erläutert. Ähnliche oder korrespondierende Einzelheiten des erfindungsgemäßen Gegenstandes sind mit denselben Bezugszeichen versehen. Weiterhin können auch einzelne Merkmale oder Merkmalskombinationen aus den gezeigten und beschriebenen Ausführungsformen für sich genommen eigenständige, erfinderische oder erfindungsgemäße Lösungen darstellen. Es zeigen:

Figur 1    Prinzipdarstellungen einer kapazitiven elektrostatischen Krafterzeugung a) mittels paralleler Elektroden und b) mittels Kammaktoren;

Figur 2    eine Prinzipdarstellung der differentiellen kapazitiven elektrostatischen Aktuierung einer Masse m;

Figur 3    eine Schaltung zum Ansteuern kapazitiver Aktoren mittels Hochspannungsoperationsverstärkern ;

Figur 4    eine Schaltung zum Ansteuern kapazitiver Aktoren mittels eines direkt mit dem Aktor verbundenen geregelten Hochspannungsgenerators;

Figur 5    eine schematische Darstellung eines Drehratensensorsystems basierend auf dem Coriolis-Effekt;

Figur 6    eine Schaltung zum Ansteuern kapazitiver Aktoren mittels eines Hochspannungsgenerators, eines Niederspannungsoperationsverstärkers und zweier Pumpkondensatoren.

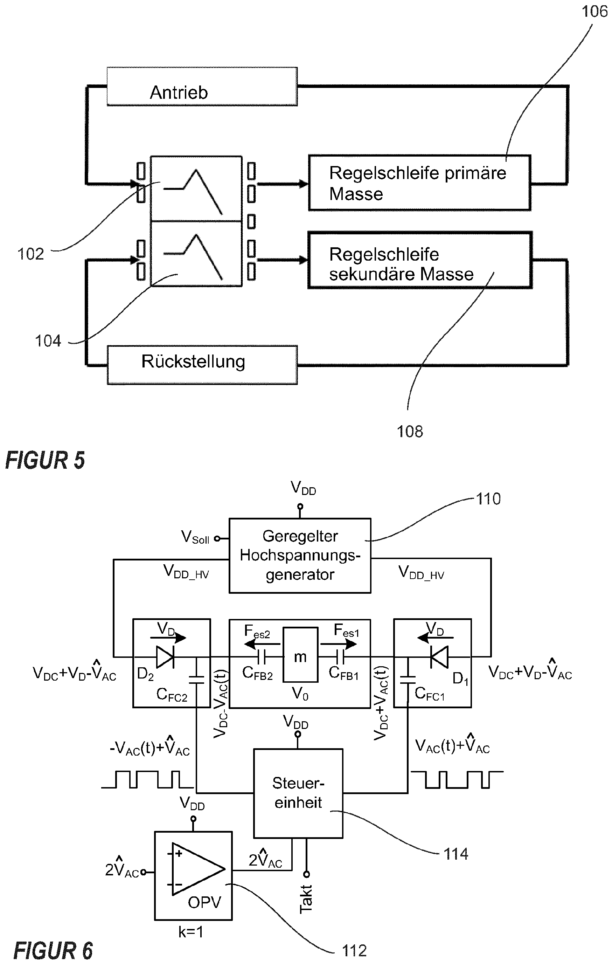

Die Erfindung wird nachfolgend mit Bezug auf die Figuren näher erläutert. Dabei zeigt Figur 5 in schematischer Darstellung einen Coriolis-Sensor, der zum einen eine Regelschleife für die primäre Masse 102 und zum anderen eine Regelschleife für die Rückstellung der sekundären Masse 104 umfasst (die primäre und die sekundäre Masse 102, 104 sind hier durch ihr Bandpassverhalten symbolisiert). Sowohl für die Regelschleife 106 der primären Masse wie auch für die Regelschleife 108 der sekundären Masse kann zum Ansteuern bzw. Rückstellen der schwingenden Massen 102, 104 eine Ansteuerschaltung gemäß der vorliegenden Erfindung eingesetzt werden. Weiterhin kann die spezielle Regelkreisanordnung des Coriolis-Sensors beispielsweise wie in dem bereits erwähnten Artikel Northemann, T. et al.: "Drive and Sense Interface for Gyroscopes based on Bandpass Sigma-Delta Modulators", Proceedings of 2010 IEEE International Symposium on Circuits and Systems (ISCAS), May 30 2010 - June 2 2010, 3264-3267, ausgestaltet sein.

Obwohl nachfolgend nur die Applikationsumgebung eines Coriolis-Sensors beschrieben ist, beschränkt sich der Anwendungsbereich nicht nur auf Drehratensensoren. Die Erfindung findet zudem auch Anwendung im zuverlässigen und leistungsarmen Betrieb weiterer kapazitiver elektrostatischer MEM Aktoren, wie Mikrospiegel, Beschleunigungssensoren und mikrostrukturierter Schalter.

Wie in Figur 5 dargestellt, wird gemäß der vorliegenden Erfindung für die Auswerte- und Antriebsschaltung eine geschlossene Regelschleife, in der jeweils eine Schaltung zur kapazitiven elektrostatischen Kraftgenerierung enthalten ist, als Aufbauprinzip verwendet. Hierbei kann der Antrieb der mechanischen Struktur sowie die Kompensation eines auftretenden Drehratensignals mit Hilfe der Erfindung sehr energieeffizient umgesetzt werden.

Um mit minimalem Energieaufwand die Spannungen $V_{DC}$ und $V_{AC}(t)$ für Erzeugung der elektrostatischen Kräfte $F_{es1,2}$ zu erzeugen, wird, wie in Figur 6 dargestellt, jeweils eine Seite (die positiv geladene Elektrode) der Pumpkondensatoren $C_{FC1}$, $C_{FC2}$ und der differentiellen Antriebskapazitäten $C_{FB1}$, $C_{FB2}$ über einen genau geregelten, in Rückkopplung betriebenen, rauscharmen Hochspannungsgenerator 110 auf die Gleichspannung $V_{DC}$ - $\hat{V}_{AC}$ geladen.

Mittels eines mit Niederspannung $V_{DD}$ versorgten Operationsverstärkers (OPV) 112 und einer Steuereinheit 114 wird an die negative Elektrode der Pumpkondensatoren $C_{FC1}$, $C_{FC2}$ die Spannung $\hat{V}_{AC} \pm V_{AC}(t)$ angelegt. Die Kapazitäten $C_{FC1}$, $C_{FC2}$ werden somit als Pumpkondensatoren betrieben. Hierdurch wird Ladung zwischen den Pumpkondensatoren $C_{FC1}$, $C_{FC2}$ und den differentiellen Antriebskapazitäten $C_{FB1}$, $C_{FB2}$ kontrolliert durch die Steuereinheit 114 ausgetauscht.

Es ergibt sich für $C_{FG1}$ >> $C_{FB1}$ und $C_{FG2}$ >> $C_{FB2}$ an den positiven Elektroden der Pumpkondensatoren $C_{FC1}$, $C_{FC2}$ und der differentiellen Antriebskapazitäten $C_{FB1}$, $C_{FB2}$ näherungsweise die Spannung $V_{DC} \pm V_{AC}(t)$ und die Kraft $F_{es,tot}$ nach Gleichung (5).

Weiterhin sind zwei Dioden $D_1$, $D_2$ vorgesehen, die als Rückflusssperre dienen und zudem zusammen mit den Kapazitäten $C_{FC1,2}$ einen Tiefpassfilter für die Ausgangsspannung des Hochspannungsgenerators $V_{DD\_HV}$ bilden. Die Dioden $D_1$, $D_2$ sind jeweils mit ihrem Anodenanschluss mit dem Hochspannungsgenerator 110 und mit ihrem Kathodenanschluss jeweils mit einem der Pumpkondensatoren $C_{FC1}$, $C_{FC2}$ verbunden. Alternativ können an dieser Stelle auch Transistoren verwendet werden.

Die Idee, auf der die vorliegende Erfindung beruht, ist die Verwendung eines NiederspannungsOperationsverstärkers 112 in Kombination mit Pumpkondensatoren $C_{FC1}$, $C_{FC2}$ zur Erzeugung von genau definierten Hochspannungssignalen zur exakten Generierung kapazitiver elektrostatischer Kräfte. Der eingesetzte Hochspannungsgenerator 110 muss unter Idealbedingungen und für kleine Bewegungen der Masse $m$ die Pumpkondensatoren $C_{FC1}$, $C_{FC2}$ und die differentiellen Antriebskapazitäten $C_{FB1}$, $C_{FB2}$ nur einmal auf ein definiertes Potential laden und wird danach nicht mehr belastet.

Insbesondere muss der Hochspannungsgenerator 110 in der Schaltung gemäß Figur 6 nicht mehr den dynamischen Strom zum Aufladen bzw. Entladen der Antriebskapazitäten $C_{FB1}$ und $C_{FB2}$ während der Umschaltvorgänge der Spannung $V_{AC}$(t) liefern. Dadurch ist die benötigte Leistung im eingeschwungenen Zustand extrem gering.

Da die verwendeten Dioden $D_1$ und $D_2$ mit den Pumpkondensatoren $C_{FC1}$, $C_{FC2}$ einen Tiefpassfilter bilden, ist zudem die Anforderung an die Welligkeit der Ausgangsspannung und somit auch an die Taktfrequenz des Hochspannungsgenerators reduziert und der Leistungsverbrauch kann weiter gesenkt werden Zudem sinkt der Leistungsbedarf des Operationsverstärkers 112 durch den Betrieb mit niedrigerer Spannung im Vergleich zur Variante mit zwei Hochspannungsoperationsverstärkern stark.

Durch die stark wachsende Nachfrage nach Inertialsensoren insbesondere im Bereich der mobilen Inertialsensorik sind die Vorteile der Erfindung im Hinblick auf einen reduzierten Leistungsverbrauch nicht zu vernachlässigen.

**Patentansprüche**

1. Schaltung zum Ansteuern einer kapazitiven MEMS-Struktur mit mindestens einem zu einer Schwingbewegung anregbaren Schwingerelement (102, 104) und einer elektrostatischen Anregungseinheit ($C_{FB1}$, $C_{FB2}$), die mindestens einen ersten und einen zweiten Eingangsanschluss besitzt, wobei die Schaltung aufweist:

   einen Hochspannungsgenerator (110) zum Erzeugen einer Hochspannung aus einer Versorgungsspannung, wobei der Hochspannungsgenerator (110) mit den beiden Eingangsanschlüssen verbindbar ist,
   mindestens einen ersten und einen zweiten Pumpkondensator ($C_{FC1}$, $C_{FC2}$) zum Aufladen der elektrostatischen Anregungseinheit ($C_{FB1}$, $C_{FB2}$), wobei ein erster Anschluss des ersten Pumpkondensators mit dem Hochspannungsgenerator verbunden ist und mit dem ersten Eingangsanschluss verbindbar ist, und ein erster Anschluss des zweiten Pumpkondensators mit dem Hochspannungsgenerator (110) verbunden ist und mit dem zweiten Eingangsanschluss verbindbar ist,
   eine Steuereinheit (114), die zum Aufprägen eines Wechselsignals mit zweiten Anschlüssen eines jeden Pumpkondensators ($C_{FC1}$, $C_{FC2}$) verbunden ist, und **gekennzeichnet durch** mindestens einen Niederspannungsoperationsverstärker (112), der zum Erzeugen eines Korrekturanteils des Wechselsignals mit der Steuereinheit verbunden ist.

2. Schaltung nach Anspruch 1, wobei zwischen jedem Pumpkondensator ($C_{FC1}$, $C_{FC2}$) und dem Hochspannungsgenerator (110) jeweils eine Sperrdiode ($D_1$, $D_2$) so angeordnet ist, dass ihre Anode mit dem Hochspannungsgenerator verbunden ist und ihre Kathode mit den ersten und zweiten Eingangsanschlüssen verbindbar ist.

3. Schaltung nach Anspruch 1 oder 2, wobei das Wechselsignal einen rechteckförmigen oder sinusförmigen zeitlichen Verlauf hat.

4. Schaltung nach einem der vorhergehenden Ansprüche, wobei die Steuereinheit (114) einen Eingang für einen intern oder extern zugeführten Takt aufweist.

5. Schaltung nach einem der vorhergehenden Ansprüche, wobei der Niederspannungsoperationsverstärker (112) einen einstellbaren Rückkopplungsfaktor k aufweist.

6. Schaltung nach einem der vorhergehenden Ansprüche, wobei die Kapazität der Pumpkondensatoren ($C_{FC1}$, $C_{FC2}$) wesentlich größer ist als die Kapazität der elektrostatischen Anregungseinheit ($C_{FB1}$, $C_{FB2}$).

7. Coriolis-Drehratensensor mit einem primären elektrostatisch anregbaren Schwingerelement (102) und einem sekundären elektrostatisch anregbaren Schwingerelement (104), wobei der Coriolis-Drehratensensor zum Ansteuern des primären und/oder zum Rückstellen des sekundären Schwingerelements eine Schaltung nach einem der vorhergehenden Ansprüche aufweist.

8. Coriolis-Drehratensensor nach Anspruch 7, wobei eine Regelschleife zum Ansteuern des primären elektrostatisch anregbaren Schwingerelements eine phasenverriegelte Regelschleife (phase locked loop, PLL) umfasst.

9. Coriolis-Drehratensensor nach Anspruch 7 oder 8, wobei eine Regelschleife zum Rückstellen des sekundären elektrostatisch anregbaren Schwingerelements einen Bandpassfilter oder Tiefpassfilter und einen Lead-Kompensator umfasst.

10. Coriolis-Drehratensensor nach einem der Ansprüche 7 bis 9, wobei die Schwingerelemente als mikromechanisch hergestellte Komponenten integriert mit zumindest einem Teil der Schaltungselemente zum Ansteuern und Auswerten hergestellt sind.

11. Verfahren zum Ansteuern einer kapazitiven MEMS-Struktur mit mindestens einem zu einer Schwingbewegung anregbaren Schwingerelement und einer elektrostatischen Anregungseinheit, die eine elektrostatische Anregungseinheit, vorzugsweise mindestens eine erste und eine zweite gekoppelte Kapazität umfasst, wobei das Verfahren die folgenden Schritte aufweist:

Aufladen jeweils einer positiven Elektrode eines ersten und eines zweiten Pumpkondensators und einer positiven Elektrode der elektrostatischen Anregungseinheit mittels eines Hochspannungsgenerators;
Anlegen einer ersten Wechselspannung an die negative Elektrode des ersten Pumpkondensators und Anlegen einer zu der ersten Wechselspannung inversen zweiten Wechselspannung an die negative Elektrode des zweiten Pumpkondensators; **gekennzeichnet durch** Überlagern der ersten und zweiten Wechselspannung mit einer Ausgleichsspannung, die von einem Istwert der tatsächlichen Position des Schwingerelements oder einer anderen geeigneten Stellgröße abhängt.

12. Verfahren nach Anspruch 11, wobei die Ausgleichsspannung von einem Niederspannungsoperationsverstärker bereitgestellt wird.

13. Verfahren nach Anspruch 11 oder 12, wobei in einem eingeschwungenen Betriebszustand ein Ladungsaustausch zwischen dem ersten Pumpkondensator und der ersten gekoppelten Kapazität sowie zwischen dem zweiten Pumpkondensator und der zweiten gekoppelten Kapazität über die Steuerung einer Steuereinheit erfolgt.

14. Verfahren nach einem der Ansprüche 11 bis 13, wobei für die Erzeugung eines Istwertsignals für den Istwert der tatsächlichen Position des Schwingerelements separate Messelektroden verwendet werden.

## Claims

1. Circuit for activating a capacitive MEMS structure with at least one oscillator element (102, 104), that can be excited to perform an oscillation movement, and an electrostatic excitation unit ($C_{FB1}$, $C_{FB2}$) having at least a first and a second input connection, wherein the circuit comprises:

a high voltage generator (110) for generating a high voltage out of a supply voltage, whereby the high voltage generator (110) can be connected with the two input connections;
at least a first and a second pump capacitor ($C_{FC1}$, $C_{FC2}$) to charge the electrostatic excitation unit ($C_{FB1}$, $C_{FB2}$), wherein a first connection of the first pump capacitor is connected to the high voltage generator and can be connected to the first input connection, and wherein a first connection of the second pump capacitor is connected to the high voltage generator (110) and can be connected to the second input connection;
a control unit (114) that is connected to second connections of each pump capacitor ($C_{FC1}$, $CFC2$) to impart an alternating signal, and
**characterized by**
at least a low voltage operation amplifier (112) that is connected to the control unit for generating an adjustment portion of the alternating signal.

2. Circuit according to Claim 1, wherein a blocking diode ($D_1$, $D_2$) is arranged between each pump capacitor ($C_{FC1}$, $C_{FC2}$) and the high voltage generator (110) in a way that its anode is connected to the high voltage generator and its cathode can be connected to the first and second input connections.

3. Circuit according to Claim 1 or 2, wherein the alternating signal has a rectangular or sine-shaped progression over time.

4. Circuit according to one of the preceding claims, wherein the control unit (114) has an input for an internally or externally triggered clock.

5. Circuit according to one of the preceding claims, wherein the low voltage operation amplifier (112) has an adjustable feedback factor k.

6. Circuit according to one of the preceding claims, wherein the capacitance of the pump capacitors ($C_{FC1}$, $C_{FC2}$) is substantially higher than the capacitance of the electrostatic excitation unit ($C_{FB1}$, $C_{FB2}$).

7. Coriolis angular rate sensor with a primary oscillator element (102) that can be electrostatically excited and a second oscillator element (104) that can be electrostatically excited, wherein the coriolis angular rate sensor has a circuit according to one of the preceding claims to activate the primary and/or to reset the secondary oscillator element.

8. Coriolis angular rate sensor according to Claim 7, wherein a control loop to activate the primary oscillator element that can be electrostatically excited comprises a phase-locked control loop (phase locked loop, PLL).

9. Coriolis angular rate sensor according to Claim 7 or 8, wherein a control loop to reset the secondary oscillator element that can be electrostatically excited comprises a band-pass filter or low-pass filter and a lead capacitor.

10. Coriolis angular rate sensor according to one of the Claims 7 to 9, wherein the oscillator elements are integrated as micromechanically produced components with at least a part of the circuit elements being designed for activation and assessment functions.

11. Process to activate a capacitive MEMS structure with at least one oscillator element, that can be excited to perform an oscillation movement, and an electrostatic excitation unit that comprises an electrostatic excitation unit, preferably at least a first and a second coupled capacitance, whereby the process is made up of the following steps:

    charging a positive electrode of respectively a first and a second pump capacitor and a positive electrode of the electrostatic excitation unit by means of a high voltage generator;
    applying an alternating voltage to the negative electrode of the first pump capacitor and applying a second alternating voltage, that is inverse to the first alternating voltage, to the negative electrode of the second pump capacitor;
    **characterized by**
    superposing the first and second alternating voltage with an interphase voltage that depends on a real value of the actual position of the oscillator element or another adjustment variable.

12. Process according to Claim 11 wherein the interphase voltage is supplied by a low voltage operation amplifier.

13. Process according to Claim 11 or 12, wherein a charge exchange between the first pump capacitor and the first coupled capacitance as well as between the second pump capacitor and the second coupled capacitance takes place in the steady operating mode through the control mechanism of a control unit.

14. Process according to one of the Claims 11 to 13, wherein separate measurement electrodes are used to generate a real value signal for the real value of the actual position of the oscillator element.

**Revendications**

1. Circuit destiné à commander une structure MEMS capacitive (microsystème électromécanique) comprenant au moins un élément oscillant (102, 104) pouvant être soumis à un mouvement oscillant par excitation, et une unité d'excitation électrostatique ($C_{FB1}$, $C_{FB2}$), qui possède au moins une première et une deuxième borne d'entrée, le circuit comprenant :

    un générateur haute tension (110) pour produire une haute tension à partir d'une tension d'alimentation, le générateur haute tension (110) pouvant être relié auxdites deux bornes d'entrée,
    au moins un premier et un deuxième condensateur de pompage ($C_{FC1}$, $C_{FC2}$) pour charger l'unité d'excitation électrostatique ($C_{FB1}$, $C_{FB2}$), une première borne du premier condensateur de pompage étant reliée au générateur haute tension et pouvant être reliée à ladite première borne d'entrée, et une première borne du deuxième condensateur de pompage étant reliée au générateur haute tension (110) et pouvant être reliée à ladite deuxième borne d'entrée,

et une unité de commande (114), qui pour l'application d'un signal alternatif, est reliée à des deuxièmes bornes de chaque condensateur de pompage ($C_{FC1}$, $C_{FC2}$), et

**caractérisé par**

au moins un amplificateur opérationnel basse tension (112), qui pour produire une fraction de correction du signal alternatif, est relié à l'unité de commande.

2. Circuit selon la revendication 1, dans lequel entre chaque condensateur de pompage ($C_{FC1}$, $C_{FC2}$) et le générateur haute tension (110), est agencée respectivement une diode de blocage (D1, D2), de manière telle, que son anode soit reliée au générateur haute tension, et que sa cathode puisse être reliée aux dites première et deuxième bornes d'entrée.

3. Circuit selon la revendication 1 ou la revendication 2, dans lequel le signal alternatif présente une loi de variation dans le temps de forme rectangulaire ou sinusoïdale.

4. Circuit selon l'une des revendications précédentes, dans lequel l'unité de commande (114) présente une entrée pour un signal d'horloge fourni en interne ou par voie externe.

5. Circuit selon l'une des revendications précédentes, dans lequel l'amplificateur opérationnel basse tension (112) présente un facteur de rétroaction k réglable.

6. Circuit selon l'une des revendications précédentes, dans lequel la capacité des condensateurs de pompage ($C_{FC1}$, $C_{FC2}$) est sensiblement plus grande que la capacité de l'unité d'excitation électrostatique ($C_{FB1}$, $C_{FB2}$).

7. Capteur de vitesse angulaire de Coriolis comprenant un élément oscillant primaire (102) pouvant être excité par voie électrostatique, et un élément oscillant secondaire (104) pouvant être excité par voie électrostatique, le capteur de vitesse angulaire de Coriolis comprenant, pour assurer la commande de l'élément oscillant primaire et/ou le rappel de l'élément oscillant secondaire, un circuit selon l'une des revendications précédentes.

8. Capteur de vitesse angulaire de Coriolis selon la revendication 7, dans lequel une boucle de régulation destinée à la commande de l'élément oscillant primaire pouvant être excité par voie électrostatique, comprend une boucle à verrouillage de phase (PLL, phase locked loop).

9. Capteur de vitesse angulaire de Coriolis selon la revendication 7 ou la revendication 8, dans lequel une boucle de régulation pour assurer le rappel de l'élément oscillant secondaire (104) pouvant être excité par voie électrostatique, comprend un filtre passe-bande ou un filtre passe-bas et un compensateur à avance de phase.

10. Capteur de vitesse angulaire de Coriolis selon l'une des revendications 7 à 9, dans lequel les éléments oscillants sont fabriqués en tant que composants de fabrication micromécanique intégrés à au moins une partie des composants de circuit pour la commande et le traitement de données.

11. Procédé pour assurer la commande d'une structure MEMS capacitive (microsystème électromécanique) comprenant au moins un élément oscillant pouvant être soumis à un mouvement oscillant par excitation, ladite une unité d'excitation électrostatique possédant, de préférence, au moins une première et une deuxième capacité couplée, le procédé comprenant les étapes suivantes :

la charge respective d'une électrode positive d'un premier et d'un deuxième condensateur de pompage, et d'une électrode positive de l'unité d'excitation électrostatique, au moyen d'un générateur haute tension ;
l'application d'une première tension alternative à l'électrode négative du premier condensateur de pompage, et l'application d'une deuxième tension alternative, opposée à la première tension alternative, à l'électrode négative du deuxième condensateur de pompage ;
**caractérisé par**
la superposition à la première et à la deuxième tension alternative d'une tension de compensation, qui dépend d'une valeur réelle de la position effective de l'élément oscillant ou d'une autre grandeur de réglage appropriée.

**12.** Procédé selon la revendication 11, d'après lequel la tension de compensation est fournie par un amplificateur opérationnel basse tension.

**13.** Procédé selon la revendication 11 ou la revendication 12, d'après lequel dans un état stable, il se produit un échange de charge entre le premier condensateur de pompage et la première capacité couplée, ainsi qu'entre le deuxième condensateur de pompage et la deuxième capacité couplée, par l'intermédiaire de la commande d'une unité de commande.

**14.** Procédé selon l'une des revendications 11 à 13, d'après lequel pour produire un signal de valeur réelle relatif à la valeur réelle de la position effective de l'élément oscillant, on utilise des électrodes de mesure séparées.

A

x

V
(+ I)

a)

V
(+ I)

h

d

x

b)

**FIGUR 1**

Primäre bzw.
sekundäre Masse

102, 104

$F_{es2}$

$F_{es1}$

m

$C_{FB2}$

$C_{FB1}$

$V_{DC}-V_{AC}(t)$

$V_0$

$V_{DC}+V_{AC}(t)$

x

**FIGUR 2**

$V_{DD}$

Hochspannungs-generator

$V_{DD\_HV}$          $V_{DD\_HV}$

$V_{DD}$

$V_{DD}$

Steuer-einheit

$(V_{DC}-V_{AC}(t))/k$

HV-OPV

k>1

$V_{DC}-V_{AC}(t)$

$F_{es2}$          $F_{es1}$

$C_{FB2}$    m    $C_{FB1}$

$V_0$

$V_{DC}+V_{AC}(t)$

HV-OPV

k>1

$(V_{DC+}V_{AC}(t))/k$

Steuer-einheit

$\hat{V}_{AC}/k$   $V_{DC}/k$   Takt

$\hat{V}_{AC}/k$   $V_{DC}/k$   Takt

## FIGUR 3

Digitales Steuersignal

Steuereinheit (DAC)

Analoges Steuersignal

$V_{DD}$

$V_{DD\_HV}$

Geregelter Hochspannungs-generator

$V_{DD\_HV}$

$F_{es2}$          $F_{es1}$

$V_{DC}$   $C_{FB2}$    m    $C_{FB1}$   $V_{DC}$

$V_0$

## FIGUR 4

106

Antrieb

102

Regelschleife primäre Masse

104

Regelschleife sekundäre Masse

Rückstellung

108

**FIGUR 5**

$V_{DD}$

$V_{Soll}$ ○—

Geregelter Hochspannungs-generator

110

$V_{DD\_HV}$

$V_{DD\_HV}$

$V_{DC}+V_D-\hat{V}_{AC}$

$V_D$

$D_2$

$C_{FC2}$

$F_{es2}$

$C_{FB2}$

$V_{DC}-V_{AC}(t)$

m

$V_0$

$F_{es1}$

$C_{FB1}$

$V_{DC}+V_{AC}(t)$

$V_D$

$D_1$

$C_{FC1}$

$V_{DC}+V_D-\hat{V}_{AC}$

$-V_{AC}(t)+\hat{V}_{AC}$

$V_{DD}$

$V_{AC}(t)+\hat{V}_{AC}$

$V_{DD}$

Steuer-einheit

114

$2\hat{V}_{AC}$ ○—

+

−

OPV

k=1

$2\hat{V}_{AC}$

Takt

112

**FIGUR 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007012518 A1
- WO 2012130541 A1

- US 20090309613 A1


**In der Beschreibung aufgeführte Nicht-Patentliteratur**

- On-chip Digitally Tunable High Voltage Generator for Electrostatic Control of Micromechanical Devices. **ARTIKEL LASSE AALTONEN ; MIKKO SAUKOSKI ; KARI HALONEN.** Custom Intergrated CircuitsConference (CICC). IEEE, 2006, 583-586

- **ARTIKEL NORTHEMANN, T. et al.** Drive and Sense Interface for Gyroscopes based on Bandpass Sigma-Delta Modulators. *Proceedings of 2010 IEEE International Symposium on Circuits and Systems (ISCAS),* 30. Mai 2010, 3264-3267